# EUROPEAN PATENT APPLICATION

(11) **EP 4 651 569 A1**
(43) Date of publication of application: **19.11.2025**
(21) Application number: 24753583.4
(22) Date of filing: 06.02.2024
(51) Int. Cl.: H04W 48/20, H04B 7/155, H04W 48/08, H04W 76/27, H04W 68/02

(54) **METHOD OF PERFORMING CELL RESELECTION OF NETWORK CONTROL REPEATER IN WIRELESS COMMUNICATION SYSTEM**

(30) Priority: 10.02.2023 KR 20230017961
(71) Applicant: Samsung Electronics Co., Ltd., Suwon-si, Gyeonggi-do 16677 (KR)
(72) Inventor: HWANG, June, Suwon-si Gyeonggi-do 16677 (KR); AGIWAL, Anil, Suwon-si Gyeonggi-do 16677 (KR)
(74) Representative: Gulde & Partner
(86) International application number: PCT/KR2024/001689
(87) International publication number: WO 2024/167257

(57) **Abstract**

The present disclosure relates to a 5G or 6G communication system for supporting a higher data transmission rate. Specifically, the present disclosure provides a method and a device for performing cell reselection of a repeater.

## Description

### [Technical Field]

The disclosure relates to a network controlled repeater in a wireless communication system. Specifically, the disclosure relates to cell reselection of a network controlled repeater.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, various services can be provided, and accordingly there is a need for ways to effectively provide these services.

### [Disclosure of Invention]

### [Technical Problem]

Embodiments set forth herein are to provide a device and a method capable of effectively providing services in a wireless communication system.

### [Solution to Problem]

In order to solve the above-described problem, the disclosure provides a method performed by a network controller repeater. The method may include acquiring validity area information from an operations, administration, and maintenance (OAM) server, amplifying and forwarding a signal of a first cell by a forward (FWD) of the NCR, receiving an RRCRelease message from the first cell by a mobile termination (MT) of the NCR, and performing a cell reselection procedure based on the validity area information by the MT of the NCR, wherein the validity area information includes a list of cells to which connection of the MT of the NCR is allowed or a list of cells to which the MT of the NCR cannot be connected.

The performing of the cell reselection procedure based on the validity area information may include ignoring a cell reselection parameter included in system information of the first cell by the MT of the NCR.

The performing of the cell reselection procedure based on the validity area information may include ignoring a cell reselection parameter included in system information of the first cell by the MT of the NCR.

The validity area information may include timer information, and the performing of the cell reselection procedure may include in case that a timer according to the timer information expires, considering the cell reselection parameter included in the system information of the first cell.

The performing of the cell reselection procedure based on the validity area information may include camping, based on the validity area information, on a second cell, and the FWD of the NCR may continue to amplify and forward the signal of the first cell in the second cell.

The method may further include receiving a paging message or a short message from the second cell by the MT of the NCR, performing a connection procedure with the second cell by the MT of the NCR, and controlling the FWD of the NCR by the second cell.

The performing of the connection procedure may include transmitting an RRCresumeRequest message or an RRCSetupRequest message to the second cell by the MT of the NCR, receiving an RRCresume message and an RRCsetup message from the second cell by the MT of the NCR, receiving the RRCresume message and the RRCsetup message by the MT of the NCR, and receiving an RRCresumecomplete message and an RRCsetupcomplete message by the MT of the NCR.

The paging message or the short message may include an indicator indicating paging for NCR control, and the RRCresume message and the RRCsetup message may include an indicator indicating access to the NCR.

The performing of the cell reselection procedure may include in case that an element is not included in the validity area information or a no-cellReselection indicator is included, identifying only the first cell as a cell for cell reselection.

In order to solve the above-described problem, the disclosure provides an NCR device including a forward (FWD) of a network controller repeater (NCR) and a mobile termination (MT) of the NCR of a wireless communication system. The NCR device may include a transceiver and at least one processor coupled to the transceiver, wherein the at least one processor is configured to acquire validity area information from an operations, administration, and maintenance (OAM) server, amplify and forward a signal of a first cell by the FWD of the NCR, receive an RRCRelease message from the first cell by the MT of the NCR, and perform a cell reselection procedure based on the validity area information by the MT of the NCR, and the validity area information includes a list of cells to which connection of the MT of the NCR is allowed or a list of cells to which the MT of the NCR cannot be connected.

The at least one processor may be configured to ignore a cell reselection parameter included in system information of the first cell by the MT of the NCR.

The validity area information may include timer information, and the at least one processor may be configured to in case that a timer according to the timer information expires, consider the cell reselection parameter included in the system information of the first cell.

The at least one processor may be configured to transmit an RRCresumeRequest message or an RRCSetupRequest message to the second cell, receive an RRCresume message and an RRCsetup message from the second cell, receive the RRCresume message and the RRCsetup message, and receive an RRCresumecomplete message and an RRCsetupcomplete message.

The at least one processor may be configured to camp, based on the validity area information, on a second cell, and the FWD of the NCR may continue to amplify and forward the signal of the first cell in the second cell.

The at least one processor may be configured to receive a paging message or a short message from the second cell by the MT of the NCR, perform a connection procedure with the second cell by the MT of the NCR, and cause the second cell to control the FWD of the NCR.

### [Advantageous Effects of Invention]

Embodiments set forth herein provide a device and a method capable of effectively providing services in a wireless communication system.

### [Brief Description of Drawings]

FIG. 1 illustrates a structure of an LTE system according to an embodiment of the disclosure.
FIG. 2 illustrates a radio protocol structure of an LTE system according to an embodiment of the disclosure.
FIG. 3 illustrates a structure of a next-generation mobile communication system according to an embodiment of the disclosure.
FIG. 4 illustrates a radio protocol structure of a next-generation mobile communication system according to an embodiment of the disclosure.
FIG. 5 is a block diagram illustrating an internal structure of a UE according to an embodiment of the disclosure.
FIG. 6 is a block diagram illustrating a structure of an NR base station according to an embodiment of the disclosure.
FIG. 7 illustrates a case where cell reselection of an MT is not allowed according to an embodiment of the disclosure.
FIG. 8 illustrates a case where cell reselection of an MT is allowed but an FWD is turned off according to an embodiment of the disclosure.
FIG. 9 illustrates a case where cell reselection of an MT is allowed but redirection to an original cell is performed according to an embodiment of the disclosure.

### [Mode for the Invention]

Hereinafter, the operation principle of the disclosure will be described in detail in conjunction with the accompanying drawings. In addition, a detailed description of known functions or configurations that may make the subject matter of the disclosure unclear will be omitted. Also, the terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure. Herein, it will be understood that each block of the flowchart illustrations, and combinations of blocks in the flowchart illustrations, can be implemented by computer program instructions.

These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved. As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by these terms and names, and may be applied in the same way to systems that conform other standards. For example, the disclosure may be applied to the 3GPP 5GS/NR (5th generation mobile communication standards).

The disclosure relates to a technology of controlling a repeater in a situation in which a termination function part of a network controlled repeater is idle/inactive in a wireless communication system.

According to an embodiment of the disclosure, due to cell reselection of a termination function part of a network controlled repeater, a case where a cell for which amplification is performed is different from a reselected cell may occur. A base station may control the repeater even when the cell for which amplification is performed is different from the reselected cell. Accordingly, the termination function of the repeater may need to receive indication so as to perform cell reselection to a cell of the base station capable of controlling the repeater even when the cell for which amplification is performed is different from the reselected cell.

According to an embodiment of the disclosure, within restricted cell lists, a repeater may be controlled even though a cell for which amplification is performed is different from a cell on which a termination part camps.

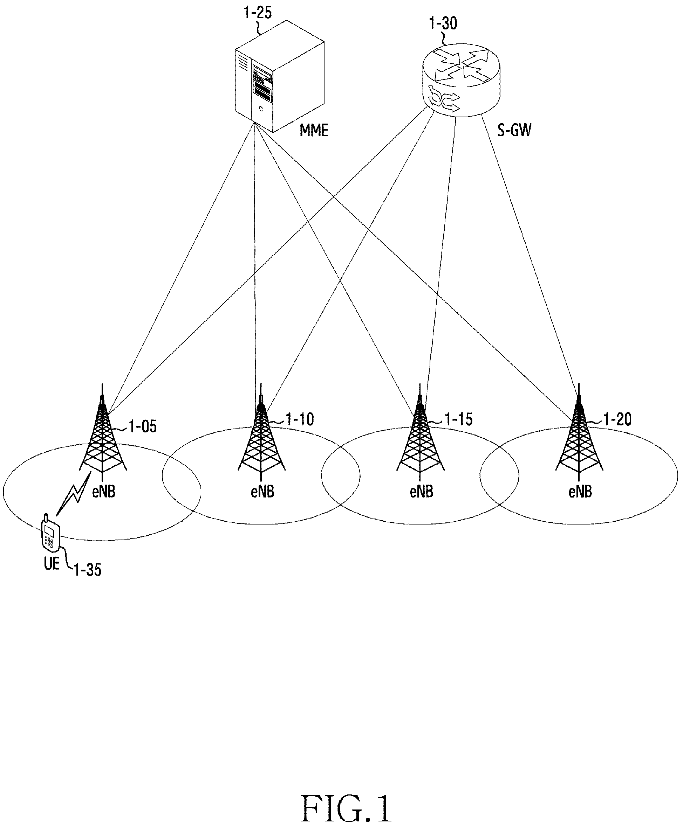

FIG. 1 illustrates a structure of an LTE system according to an embodiment of the disclosure.

Referring to FIG. 1, as illustrated therein, a radio access network of an LTE system may include next-generation base stations (evolved node Bs, hereinafter ENBs, node Bs, or base stations) 1a-05, 1a-10, 1a-15, and 1a-20, a mobility management entity (MME) 1a-25, and a serving gateway (S-GW) 1a-30. A user equipment (hereinafter UE or terminal) 1a-35 may access an external network through the ENBs 1a-05 to 1a-20 and the S-GW 1a-30.

In FIG. 1, the ENBs 1a-05 to 1a-20 may correspond to conventional node Bs of a universal mobile telecommunication system (UMTS). The eNBs may be connected to the UE 1a-35 through a radio channel, and perform more complicated roles than the conventional node Bs. In the LTE system, since all user traffic including real-time services, such as voice over IP (VoIP) via the Internet protocol, may be serviced through a shared channel. Thus, a device that collects state information, such as buffer states, available transmit power states, and channel states of UEs, and performs scheduling accordingly is required, and the ENBs 1a-05 to 1a-20 may serve as the device. In general, one ENB may control multiple cells. For example, in order to implement a transfer rate of 100 Mbps, the LTE system may use orthogonal frequency division multiplexing (OFDM) as a radio access technology in a bandwidth of, for example, 20MHz. Of course, the example given above is not limiting. Furthermore, the ENBs 1a-05 to 1a-20 may employ an adaptive modulation & coding (hereinafter referred to as AMC) scheme for determining a modulation scheme and a channel coding rate according to a channel state of a UE. The serving gateway (S-GW) 1a-30 is a device that provides a data bearer, and may generate or remove a data bearer under the control of the mobility management entity (MME) 1a-25. The MME is a device responsible for various control functions as well as a mobility management function for a UE, and may be connected to multiple base stations.

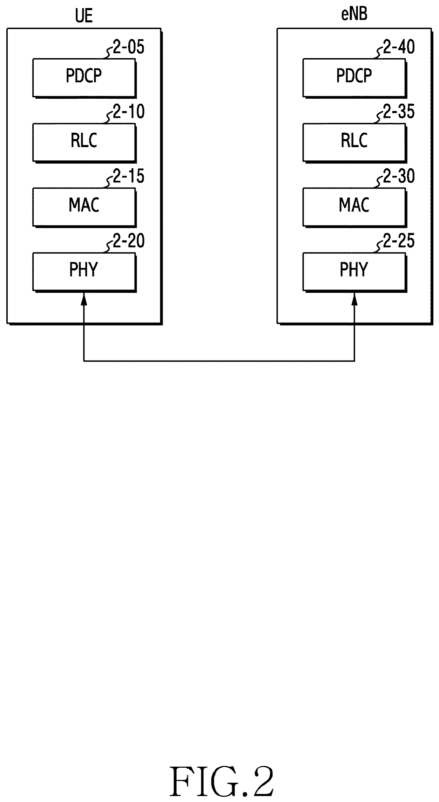

FIG. 2 illustrates a radio protocol structure of an LTE system according to an embodiment of the disclosure.

Referring to FIG. 2, a radio protocol of an LTE system may include a packet data convergence protocol (PDCP) 2-05 or 2-40, a radio link control (RLC) 2-10 or 2-35, a medium access control (MAC) 2-15 or 2-30, and a physical layer 2-20 or 2-25 on each of UE and ENB sides. Of course, the radio protocol of the LTE system may include a larger or smaller number of layers than the structure illustrated in FIG. 2.

According to an embodiment of the disclosure, the PDCP 2-05 or 2-40 may serve to perform operations, such as IP header compression/reconstruction. The main functions of the PDCP 2-05 or 2-40 may be summarized as follows. Obviously, the examples given below are not limiting. Obviously, the examples given below are not limiting.
- Header compression and decompression: robust header compression (ROHC) only
- Transfer of user data
- In-sequence delivery of upper layer PDUs at PDCP re-establishment procedure for RLC acknowledged mode (AM)
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

According to an embodiment of the disclosure, the radio link control (RLC) 2-10 or 2-35 may reconfigure a PDCP protocol data unit (PDU) into an appropriate size to perform an ARQ operation. The main functions of the RLC may be summarized as follows. Obviously, the examples given below are not limiting.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

According to an embodiment of the disclosure, the MAC 2-15 or 2-30 may be connected to several RLC layer devices configured in a single terminal, and multiplex RLC PDUs to a MAC PDU and demultiplex a MAC PDU to RLC PDUs. The main functions of the MAC 2-15 or 2-30 are summarized as follows. Obviously, the examples given below are not limiting.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

According to an embodiment of the disclosure, a physical layer 2-20 or 2-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer. Obviously, the examples given below are not limiting.

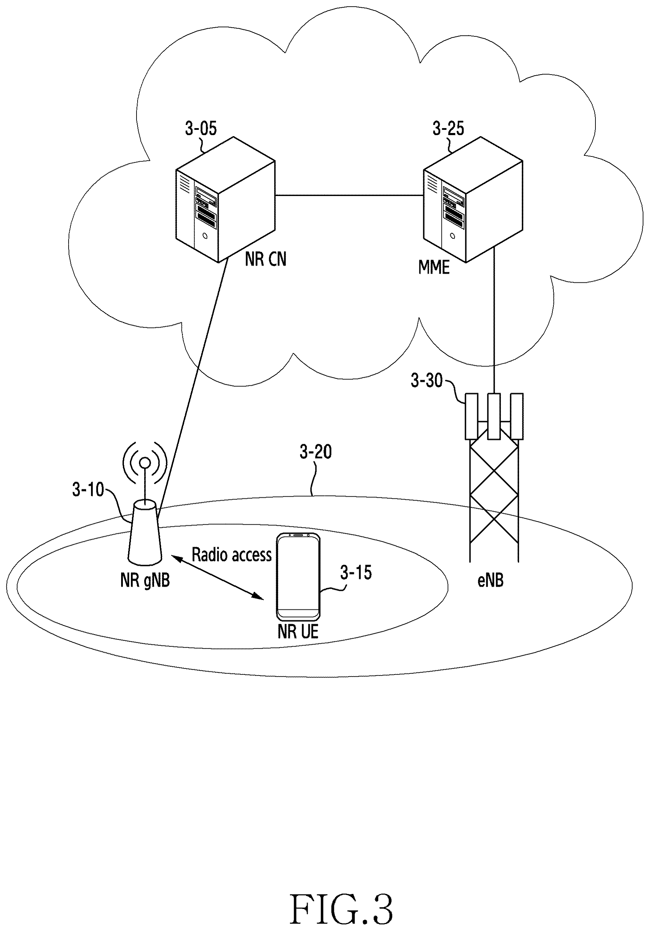

FIG. 3 illustrates a structure of a next-generation mobile communication system according to an embodiment of the disclosure.

Referring to FIG. 3, a radio access network of a next-generation mobile communication system (hereinafter NR or 5G) may include a new radio node B (hereinafter NR gNB or NR base station) 3-10, and a new radio core network (NR CN) 3-05. A new radio user equipment (NR UE or NR terminal) 3-15 may access an external network via the NR gNB 3-10 and the NR CN 3-05.

In FIG. 3, the NR gNB 3-10 may correspond to an evolved node B (eNB) of a conventional LTE system. The NR gNB may be connected to the NR UE 3-15 through a radio channel and provide outstanding services as compared to a conventional node B. In the next-generation mobile communication system, since all user traffic may be serviced through a shared channel. Thus, a device that collects state information, such as buffer states, available transmit power states, and channel states of UEs, and performs scheduling accordingly is required, and the NR gNB 3-10 may serve as the device. In general, one NR gNB may control multiple cells.

According to an embodiment of the disclosure, in order to implement ultrahigh-speed data transfer beyond the current LTE, the next-generation mobile communication system may provide a wider bandwidth than the existing maximum bandwidth. in addition, the next-generation mobile communication system may employ an orthogonal frequency division multiplexing (OFDM) as a radio access technology, and additionally use a beamforming technology.

Furthermore, according to an embodiment of the disclosure, the NR gNB may employ an adaptive modulation & coding (hereinafter referred to as AMC) scheme for determining a modulation scheme and a channel coding rate according to a channel state of a UE. The NR CN 3-05 may perform functions such as mobility support, bearer configuration, and QoS configuration. The NR CN 3-05 is a device responsible for various control functions as well as a mobility management function for a UE, and may be connected to multiple base stations. In addition, the next-generation mobile communication system may interwork with the existing LTE system, and the NR CN 3-05 may be connected to an MME 3-25 via a network interface. The MME 3-25 may be connected to an eNB 3-30 that is an existing base station.

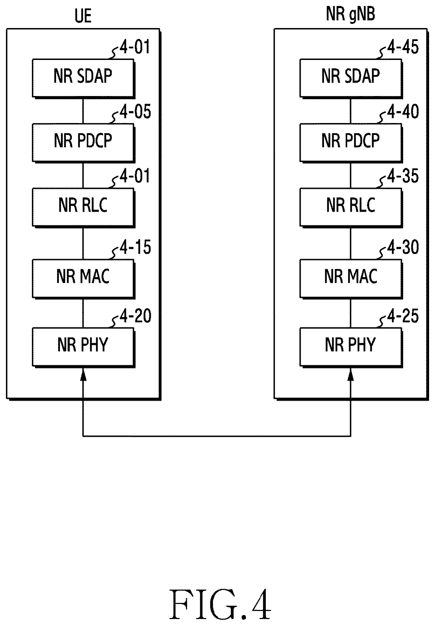

FIG. 4 illustrates a radio protocol structure of a next-generation mobile communication system according to an embodiment of the disclosure;

Referring to FIG. 4, a radio protocol of a next-generation mobile communication system may include an NR service data adaptation protocol (SDAP) layer 4-01 or 4-45, an NR PDCP layer 4-05 or 4-40, an NR RLC layer 4-10 or 4-35, an NR MAC layer 4-15 or 4-30, and an NR PHY layer 4-20 or 4-25 on each of UE and NR base station sides. Of course, the radio protocol of the next-generation mobile communication system may include a larger or smaller number of layers than the structure illustrated in FIG. 4.

According to an embodiment of the disclosure, the main functions of the NR SDAP layer device 4-01 or 4-45 may include some of functions below. Obviously, the examples given below are not limiting.
- Transfer of user plane data
- Mapping between a QoS flow and a DRB for both DL and UL
- Marking QoS flow ID in both DL and UL packets
- Reflective QoS flow to DRB mapping for UL SDAP PDUs

With regard to the SDAP layer device 4-01 or 4-45 (hereinafter interchangeably used with layer or layer device), whether to use the header of the SDAP layer device or whether to use functions of the SDAP layer device may be configured for the UE through an RRC message according to each PDCP layer device or according to each bearer or according to each logical channel. Also, if an SDAP header is configured for the SDAP layer device 4-01 or 4-45, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. According to an embodiment, the SDAP header may include QoS flow ID information indicating the QoS. According to an embodiment, the QoS information may be used as data processing priority, scheduling information, etc. for smoothly supporting services.

According to an embodiment of the disclosure, the main functions of the NR PDCP 4-05 or 4-40 may include some of functions below. Obviously, the examples given below are not limiting.
- Header compression and decompression: robust header compression (ROHC) only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

Among the above-described functions, the reordering of the NR PDCP layer device 4-05 or 4-40 may refer to a function of reordering PDCP PDU received from a lower layer in an order based on PDCP sequence numbers (SNs). The reordering of the NR PDCP layer device 4-05 or 4-40 may include at least one of a function of transferring data to an upper layer according to a rearranged order, a function of directly transferring data without considering order, a function of rearranging order to record lost PDCP PDUs, a function of reporting the state of lost PDCP PDUs to a transmission side, and a function of requesting retransmission of lost PDCP PDUs.

According to an embodiment of the disclosure, the main functions of the NR RLC layer device 4-10 or 4-35 may include some of functions below. Obviously, the examples given below are not limiting.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

Among the above-described functions, the in-sequence delivery of the NR RLC layer device 4-10 or 4-35 may refer to a function of delivering RLC SDUs, received from the lower layer, to the upper layer in sequence. The in-sequence delivery of the NR RLC layer device 4-10 or 4-35 may include a function of, if one original RLC SDU is divided into several RLC SDUs and the RLC SDUs are received, reassembling the several RLC SDUs and transferring the reassembled RLC SDUs.

According to an embodiment of the disclosure, the in-sequence delivery of the NR RLC layer device 4-10 or 4-35 may include at least one of a function of, if one original RLC SDU is segmented into multiple RLC SDUs and the segmented RLC SDUs are received, reassembling the RLC SDUs and delivering the reassembled RLC SDUs, a function of reordering the received RLC PDUs with reference to the RLC sequence number (SN) or PDCP sequence number (SN), a function of recording RLC PDUs lost as a result of reordering, a function of reporting the state of the lost RLC PDUs to the transmitting side, and a function of requesting retransmission of the lost RLC PDUs.

According to an embodiment of the disclosure, the in-sequence delivery of the NR RLC layer device 4-10 or 4-35 may include a function of, if there is a lost RLC SDU, sequentially delivering only RLC SDUs before the lost RLC SDU to the upper layer.

According to an embodiment of the disclosure, the in-sequence delivery of the NR RLC layer device 4-10 or 4-35 may also include a function of, although there is a lost RLC SDU, if a predetermined timer has expired, sequentially transferring all the RLC SDUs received up to the current, to an upper layer.

According to an embodiment of the disclosure, the in-sequence delivery of the NR RLC layer device 4-10 or 4-35 may include a function of, although there is a lost RLC SDU, if a predetermined timer has expired, sequentially delivering, to the upper layer, all the RLC SDUs received up to the current time.

According to an embodiment of the disclosure, the NR RLC layer device 4-10 or 4-35 may process RLC PDUs in a reception sequence, regardless of a sequence based on sequence numbers (out-of-sequence delivery). and then deliver the processed RLC PDUs to the NR PDCP device.

According to an embodiment of the disclosure, upon receiving segments, the NR RLC layer device 4-10 or 4-35 may receive segments stored in a buffer or to be received in the future, reconfigure the segments into one whole RLC PDU, process the RLC PDU, and then deliver the processed RLC PDU to the NR PDCP device.

According to an embodiment of the disclosure, the NR RLC layer device 4-10 or 4-35 may include no concatenation function, which may be performed in the NR MAC layer or replaced with a multiplexing function of the NR MAC layer.

Among the above-described functions, the out-of-sequence delivery of the NR RLC layer device 4-10 or 4-35 may refer to a function of delivering RLC SDUs, received from the lower layer, to the upper layer in an out-of-sequence. The out-sequence delivery of the NR RLC layer device 4-10 or 4-35 may include a function of, if one original RLC SDU is segmented into multiple RLC SDUs and the segmented RLC SDUs are received, reassembling the RLC SDUs and delivering the reassembled RLC SDUs. The out-of-sequence delivery function of the NR RLC layer device 4-10 or 4-35 may include a function of storing an RLC sequence number (SN) or a PDCP sequence number (SN) of received RLC PDUs and arranging order to record lost RLC PDUs.

According to an embodiment of the disclosure, the NR MAC layer device 4-15 or 4-30 may be connected to multiple NR RLC layer devices configured in one UE, and the main functions of the NR MAC layer device 4-15 or 4-30 may include some of functions below. Obviously, the examples given below are not limiting.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

According to an embodiment of the disclosure, the NR PHY layer device 4-20 or 4-35 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

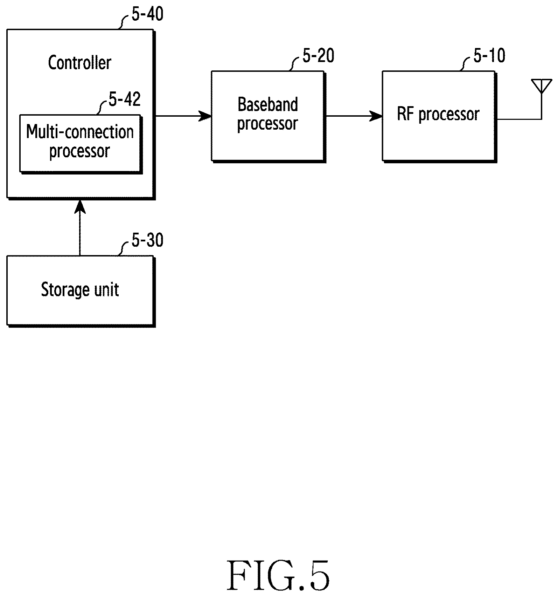

FIG. 5 is a block diagram illustrating a structure of a UE according to an embodiment of the disclosure.

Referring to FIG. 5, the UE may include a radio frequency (RF) processor 5-10, a baseband processor 5-20, a storage unit 5-30, and a controller 5-40.

The RF processor 5-10 may perform a function for transmitting and receiving a signal via a wireless channel, such as band conversion and amplification of the signal. That is, the RF processor 5-10 may up-convert a baseband signal provided from the baseband processor 5-20 to an RF band signal, may transmit the same through an antenna, and may down-convert an RF band signal received through the antenna to a baseband signal. For example, the RF processor 5-10 may include a transmission filter, a reception filter, an amplifier, a mixer, an oscillator, a digital-to-analog converter (DAC), an analog-to-digital converter (ADC), and the like. Although only one antenna is illustrated in FIG. 5, the UE may include multiple antennas. In addition, the RF processor 5-10 may include multiple RF chains. Furthermore, the RF processor 5-10 may perform beamforming. For the beamforming, the RF processor 5-10 may adjust the phase and magnitude of each of signals transmitted and received through multiple antennas or antenna elements. In addition, the RF processor 5-10 may perform MIMO, and may receive multiple layers when performing MIMO operations. The RF processor 5-10 may appropriately configure multiple antennas or antenna elements to perform reception beam sweeping or may adjust the direction and beam width of a reception beam so as to resonate the reception beam with a transmission beam under the control of the controller.

The baseband processor 5-20 may perform functions of conversion between baseband signals and bitstrings according to the system's physical layer specifications. For example, during data transmission, the baseband processor 5-20 may encode and modulate a transmitted bitstring to generate complex symbols. In addition, during data reception, the baseband processor 5-20 may demodulate and decode a baseband signal provided from the RF processor 5-10 to restore a received bitstring. For example, when following the orthogonal frequency division multiplexing (OFDM) scheme, during data transmission, the baseband processor 5-20 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 5-20 may split a baseband signal provided from the RF processor 5-10 at the OFDM symbol level, may restore signals mapped to subcarriers through a fast Fourier transform (FFT) operation, and may restore a received bitstring through demodulation and decoding.

According to an embodiment, the baseband processor 5-20 and the RF processor 5-10 may transmit and/or receive a signal as described above. Therefore, the baseband processor 5-20 and the RF processor 5-10 may be referred to as a transmitter, a receiver, a transceiver, or a communication unit. Furthermore, at least one of the baseband processor 5-20 and the RF processor 5-10 may include multiple communication modules to support multiple different radio access technologies. In addition, at least one of the baseband processor 5-20 and the RF processor 5-10 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands. The UE may transmit/receive a signal with the base station by using the baseband processor 5-20 and the RF processor 5-10, and the signal may include control information and data. The UE may transmit/receive a signal with the base station by using the baseband processor 5-20 and the RF processor 5-10, and the signal may include control information and data.

The storage unit 5-30 may store basic programs, application programs, and data, such as configuration information, for operation of the UE. Particularly, the storage unit 5-30 may store information regarding a second access node configured to perform wireless communication by using a second radio access technology. In addition, the storage unit 5-30 provides the stored data at the request of the controller 5-40. In addition, the storage unit 5-30 may be configured by multiple memories. According to an embodiment, the storage unit 5-30 may store programs for performing cell reselection of a network control repeater as described in the disclosure.

The controller 5-40 controls the overall operation of the UE. For example, the controller 5-40 may transmit/receive signals through the baseband processor 5-20 and the RF processor 5-10. In addition, the controller 5-40 records data in the storage unit 5-30 and reads the data from the storage unit 5-30. To this end, the controller 5-40 may include at least one processor. For example, the controller 5-40 may include a communication processor (CP) configured to perform control for communication, and an application processor (AP) configured to control upper layers such as application programs. In addition, at least one component in the UE may be implemented as a single chip. Furthermore, according to an embodiment of the disclosure, the controller 5-40 may include a multi-connection processor 5-42 which performs processing for operation in a multi-connection mode. In addition, the respective components of the UE may be operated to perform the embodiments of the disclosure.

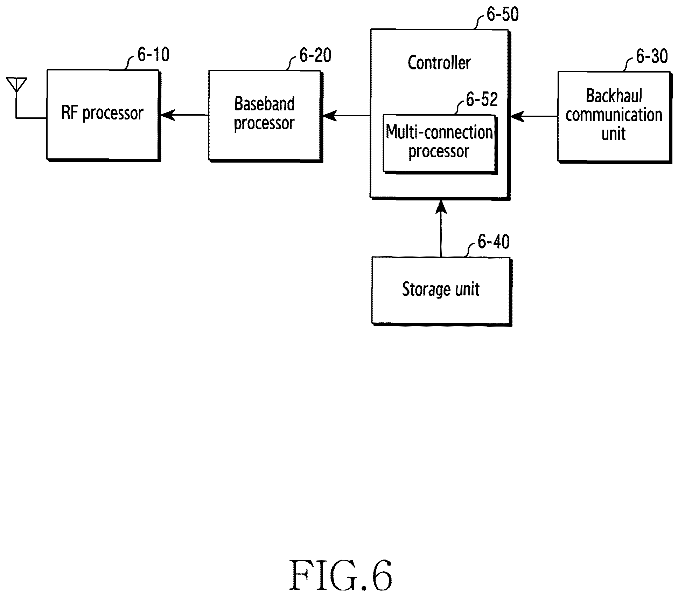

FIG. 6 is a block diagram illustrating a structure of an NR base station according to an embodiment of the disclosure.

Referring to FIG. 6, the base station may include an RF processor 6-10, a baseband processor 6-20, a backhaul communication unit 6-30, a storage unit 6-40, and a controller 6-50. Obviously, the example given above is not limitative, and the base station may include a smaller or larger number of components than the components illustrated in FIG. 6.

According to an embodiment, the RF processor 6-10 may perform functions for transmitting/receiving signals through a radio channel, such as signal band conversion and amplification. That is, the RF processor 6-10 may up-convert a baseband signal provided from the baseband processor 6-20 to an RF band signal, may transmit the same through an antenna, and may down-convert an RF band signal received through the antenna to a baseband signal. For example, the RF processor 6-10 may include a transmission filter, a reception filter, an amplifier, a mixer, an oscillator, a DAC, and an ADC. Although only one antenna is illustrated in FIG. 6, the RF processing unit 6-10 may include multiple antennas. In addition, the RF processor 6-10 may include multiple RF chains. Furthermore, the RF processor 6-10 may perform beamforming. For the beamforming, the RF processor 6-10 may adjust the phase and magnitude of each of signals transmitted and received through multiple antennas or antenna elements. The RF processor may transmit one or more layers to perform a downward MIMO operation.

According to an embodiment, the baseband processor 6-20 may perform a function of conversion between a baseband signal and a bitstream according to a physical layer specification of a first wireless access technology. For example, during data transmission, the baseband processor 6-20 may encode and modulate a transmitted bitstring to generate complex symbols. In addition, during data reception, the baseband processor 6-20 may demodulate and decode a baseband signal provided from the RF processor 6-10 to restore a received bitstring. For example, when following the OFDM scheme, during data transmission, the baseband processor 6-20 may encode and modulate a transmitted bitstring to generate complex symbols, may map the complex symbols to subcarriers, and may configure OFDM symbols through an IFFT operation and CP insertion. In addition, during data reception, the baseband processor 6-20 may split a baseband signal provided from the RF processor 6-10 at the OFDM symbol level, may restore signals mapped to subcarriers through FFT operation, and may restore a received bitstring through demodulation and decoding. The baseband processor 6-20 and the RF processor 6-10 may transmit and receive signals as described above. Therefore, the baseband processor 6-20 and the RF processor 6-10 may be referred to as a transmitter, a receiver, a transceiver, a communication unit, or a wireless communication unit. The base station may transmit/receive a signal with the UE by using the baseband processor 6-20 and the RF processor 6-10, and the signal may include control information and data.

According to an embodiment of the disclosure, the backhaul communication unit 6-30 may provide an interface for communicating with other nodes in the network. That is, the backhaul communication unit 6-30 may convert bitstrings transmitted from the main base station to other nodes (for example, auxiliary base station, core network) to physical signals, and may convert physical signals received from the other nodes to bitstrings. The backhaul communication unit 6-30 may be included in a communication unit.

The storage unit 6-40 may store basic programs, application programs, and data, such as configuration information, for operation of the main base station. In particular, the storage unit 6-40 may store information on bearers allocated to the connected UE, measurement results reported from the connected UE, and the like. In addition, the storage unit 6-40 may store information serving as a reference to determine whether to provide multi-connection to a UE or to suspend the same. In addition, the storage unit 6-40 provides stored data at the request of the controller 6-50. The storage unit 6-40 may be configured by a storage media such as a ROM, a RAM, a hard disk, a CD-ROM, and a DVD, or a combination of storage media. In addition, the storage unit 6-40 may be configured by multiple memories. According to an embodiment, the storage unit 6-40 may store programs for performing cell reselection of a network control repeater as described in the disclosure.

According to an embodiment, the controller 6-50 may control the overall operation of the main base station. For example, the controller 6-50 may transmit/receive signals through the baseband processor 6-20 and the RF processor 6-10 or through the backhaul communication unit 6-30. In addition, the controller 6-50 records data in the storage unit 6-40 and reads the data from the storage unit 6-40. To this end, the controller 6-50 may include at least one processor. In addition, at least one component in the base station may be implemented as a single chip. In addition, the respective components of the base station may be operated to perform the above-described embodiments of the disclosure.

In the disclosure, the following abbreviations can be used.
Network controlled repeater (NCR)
Mobile termination (MT) (termination function part)
Forward (FWD) (amplification function part)

According to an embodiment of the disclosure, an NCR may be divided in an MT part and an FWD part. The FWD part may be an amplification function part for receiving a signal of a cell and amplifying and transmitting the same, and also receiving signals of UEs and amplifying and transmitting the same in a base station direction. The MT part may receive a beam-related configuration of the FWD from a base station (e.g., gNB) and transfer the same to the FWD.

The state of the FWD may include an ON state and an OFF state. The ON state may refer to a state in which the FWD amplifies a signal of a cell and forwards the same to the UE, and/or amplifies the signal of the UE and forwards the same to a cell of the gNB. The OFF state may be defined as a state in which the operation is not performed.

According to an embodiment of the disclosure, the NCR MT may be connected in inactive and idle modes (NCR MT can be connected, inactive, and IDLE), the NCR FWD may be in the ON/OFF state (NCR FWD would be ON or OFF), the FWD may be in the ON/OFF state according to the latest configuration from a serving cell in the inactive/idle mode of the MT (For inactive/idle mode of MT, FWD can be ON or OFF by following the latest configuration given from serving cell), cell reselection needs to be mandatorily supported in the inactive/idle mode of the MT (For inactive/idle state MT, cell reselection is mandatory supported), a gNB cell for which the NCR-Fwd performs forwarding may be the same cell as a cell to which the NCR-MT is connected (gNB cell that NCR-Fwd is forwarding is the same cell the NCT-MT is connected to), and HO and related RRM may not be allowed for the MT (MT is not allowed for HO and related RRM).

According to an embodiment of the disclosure, even though the MT transitions to the idle/inactive mode, the FWD may still maintain the ON state for an initially connected cell. However, the MT can also perform cell reselection, and thus can also perform reselection to a cell other than a cell for which the FWD is currently performing amplification/forwarding according to a cell reselection condition. That is, as described above, the cell for which the FWD is performing amplification/forwarding may be not be the same cell as a cell to the MT is connected to or camped on.

In other words, even in a case where a specific cell (or multiple specific cells) is not a cell for which the FWD performs amplification but the MT is connected to or camped on the specific cell, when the specific cell for which the FWD performs amplification/forwarding can be still controlled, a method for controlling the MT to perform reselection to the corresponding cell only may be considered.

An allowed area for cell reselection of the UE may be provided through information below.

In a case of NR, intraFreqAllowedCellList and intraFreqExcludedCellList have been introduced in SIB3, interFreqAllowedCellList and interFreqExcludedCellList have been introduced in SIB4, and the lists provided through SIB3 and SIB4 indicate allowed cell lists or excluded cell lists for a general UE.

In a case of dedicated signaling, a redirectedCarrierInfo field may be included in an RRCRelease message, the redirectedCarrierInfo field includes a specific RAT type and frequency information, performs a role of causing the UE to perform cell selection to a cell existing in the frequency of the corresponding RAT type at a time point of receiving the RRCRelease message, and can be thus used for the purpose of moving a current serving cell UE.

Accordingly, a specialized cell reselection control method for the NCR MT may be required.
- The gNB may receive, in advance, a configuration of an allowed area for cell reselection for a specific NCR node through Operations, administration, and maintenance (OAM). The configuration of the allowed area for cell reselection for the specific NCR node may be used for configuration of an allowed area for cell reselection through system information or configuration of an allowed area for cell reselection through dedicated signaling as proposed below.
- Operation 1: Cell reselection control methods
- Among the following parameters of Opt. 1, intraFreqAllowedCellList_NCR and interFreqAllowedCellList_NCR may be included in information on an exclusively allowed candidate cell when the MT performs cell reselection. On the other hand, among the parameters of Opts. 2 and 3, validity area information may include information on an exclusively allowed candidate cell when the MT performs cell reselection, and may include information on a cell allowed for control toward the FWD without a change in the cell for which the FWD is currently performing amplification/forwarding while maintaining the FWD ON state in a reselected cell regardless of cell reselection. Here, the meaning of being exclusively allowed is that only the corresponding cell is considered as a candidate for cell reselection.
- Opt. 1. Method for using system information
   --- A serving cell of an NCR node may broadcast the following information by using system information.
      ---- intraFreqAllowedCellList_NCR: When a list of cells existing in the frequency of a current serving cell among a list of cells that the NCR MT needs to consider as a candidate for cell reselection, i.e., intraFreqAllowedCellList_NCR, is configured, other detected cells not included in intraFreqAllowedCellList_NCR are not considered as candidates for cell reselection.
         ----- As the information of the cell, a physical cell identifier (PCI) list per PLMN may be included.
      ---- interFreqAllowedCellList_NCR: When a list of cells on frequencies other than the frequency of the current serving cell among the list of cells that the NCR MT needs to consider as candidates for cell reselection, i.e., interFreqAllowedCellList_NCR, is configured, other detected cells not included in interFreqAllowedCellList_NCR are not considered as candidates for cell reselection.
         ----- As the information of the cell, a PCI list per PLMN for each frequency may be included.
      ---- intraFreqExcludedCellList _NCR: When a list of cells existing in the frequency of the current serving cell among the list of cells that the NCR MT should not consider as a candidate for cell reselection, i.e., intraFreqExcludedCellList_NCR, is configured, other detected cells not included in intraFreqExcludedCellList_NCR may be considered as candidates for cell reselection.
         ----- As the information of the cell, a physical cell identifier (PCI) list per PLMN may be included.
      ---- interFreqAllowedCellList_NCR: When a list of cells on frequencies other than the frequency of the current serving cell among the list of cells that the NCR MT should not consider as candidates for cell reselection, i.e., interFreqAllowedCellList_NCR, is configured, other detected cells not included in interFreqAllowedCellList_NCR may be considered as candidates for cell reselection.
         ----- As the information of the cell, a PCI list per PLMN for each frequency may be included.
      ---- intraFreqAllowedCellList_NCR and/or intraFreqExcludedCellList_NCR may be broadcasted through SIB3.
      ---- interFreqAllowedCellList_NCR and/or interFreqExcludedCellList_NCR may be broadcasted through SIB4.
      ---- At least one of intraFreqAllowedCellList_NCR, intraFreqExcludedCellList_NCR, interFreqAllowedCellList_NCR, and interFreqExcludedCellList_NCR may be broadcasted through an SIB other than SIB3 or SIB4, or a new SIB.
      ---- The above-described lists (at least one of intraFreqAllowedCellList_NCR, intraFreqExcludedCellList_NCR, interFreqAllowedCellList_NCR, and interFreqExcludedCellList_NCR) may be configured in parallel to the existing list, or may be configured as a sub field of the existing list.
      ---- Intra/interFreqAllowedCellList_NCR and intra/interFreqExcludedCellList_NCR may be configured in parallel to each other, or may be configured as a choice structure in which only one of the two can be configured.
         ----- When being configured in parallel to each other, cells in the excluded list may be excluded and only the allowed cell list may be considered as a candidate c ell when the MT performs cell reselection.
         ----- When being configured as a choice structure, only cells in the allowed cell list may be considered, or only cells in the excluded cell list may be excluded when considering a candidate cell when the MT performs cell reselection.
         ----- When there is no element in the field of Intra/interFreqAllowedCellList_NCR, or when a no-cellReselection indicator exists therein, the MT may consider (or identify) only the current serving cell as a cell reselection target. That is, the MT may consider (or identify) the same as an indication not to perform cell reselection to another cell.
   --- When the MT having received the above-described information through system information later receives an RRCRelease (with suspendConfig) message from a serving base station, the MT may transition to an idle/ inactive and perform a cell reselection operation. In this case, the MT performs cell reselection by applying the received allowed and/or excluded cell list information.
      ---- In this case, the MT may ignore the intraFreqAllowedCellList, intraFreqExcludedCellList, interFreqAllowedCellList, and interFreqExcludedCellList information transmitted through existing SIB3 and SIB4. However, the disclosure is not limited to the example above.
   --- Relatively, a general UE not corresponding to a repeater may ignore intraFreqAllowedCellList_NCR, intraFreqExcludedCellList_NCR, interFreqAllowedCellList_NCR, and interFreqExcludedCellList_NCR when performing cell reselection. However, the disclosure is not limited to the example above.
   --- When the MT camps on the allowed cell, the FWD may continue to maintain the ON state. When the MT camps on other cells, the FWD may be in the OFF state.
- Opt. 2. Method for using dedicated signaling
   --- When a serving base station causes an MT to transition to an idle/inactive state, the serving base station may transmit an RRCRelease (with suspendConfig) message to the MT. In this case, the RRCRelease message may include the following information.
      ---- The following information may be included as validity area information.
         ----- A list of cells (a list of PCIs and/or NR cell global identifiers (CGIs)) per frequency per PLMN
         ----- In addition, information on subcarrier spacing and/or SSB measurement timing configuration (SMTC) associated with each cell or frequency
         ----- In addition, a timer value
            ------ When the MT may receive the RRCRelease message, a timer starts, and the MT considers the validity area information as valid until the timer expires. After the expiry, the MT may not consider the validity area information.
         ----- When there is not element in the field of the validity area information, or a no-cellReselection indicator exists therein, the MT may consider (or identify) only the current serving cell as a cell reselection target. That is, the MT may consider (or identify) the same as an indication not to perform cell reselection to another cell.
      ---- The validity area may be identical to a RAN notification area. In this case, the MT receive configuration of the validity area in the same configuration method as for the RAN notification area. That is, area information included in a ran-NotificationAreaInfo field of the RRCRelease (with suspendConfig) message may mean a validity area in the case of the NCR MT. The RAN area code information is transmitted through SIB1 transmitted by each cell, and when the RAN area code transmitted by the corresponding cell is identical to the ran-NotificationAreaInfo received through the RRCRelease message by the MT itself, the MT may perform cell reselection to the corresponding cell and camp thereon.
   --- When the MT receives the RRCRelease message and performs cell reselection, the MT may consider only a cell belonging to the corresponding validity area as a cell reselection candidate. In this case, the state of the FWD is maintained as the ON state, and the FWD may continue to operate while maintaining the cell of the amplified/forwarded signal without change.
      ---- In another embodiment, in a case where the MT receives the RRCRelease message and performs cell reselection, when the MT performs cell reselection in the existing method (i.e., performs cell reselection regardless of the validity area) and the selected cell belongs to the validity area, the MT may not perform resumption requesting or setup requesting, and the state of the FWD may be also maintained as the ON state while the FWD performs amplification/forwarding for the previous cell. However, when the selected cell is a cell not belonging to the validity area, the MT may transmit a resume request message or a setup request message to the corresponding cell to request resumption or connection, and the base station may transmit a resume message or a setup message to the MT. The message for requesting resumption or connection setup may include a cause value. The cause value include an indicator corresponding to connection for NCR access control or update of an NCR MT cell. When the MT performs cell reselection to a cell not belonging to the validity area or camp thereon, the FWD may be OFF. In this case, the MT may transmit an OFF indicator to the FWD.
   --- When intraFreqAllowedCellList_NCR, intraFreqExcludedCellList_NCR, interFreqAllowedCellList_NCR, and interFreqExcludedCellList_NCR exist in the system information of the serving cell, or when intraFreqAllowedCellList, intraFreqExcludedCellList, interFreqAllowedCellList, and interFreqExcludedCellList exist therein, the MT may ignore the information when performing cell reselection. However, the disclosure is not limited to the example above.
      ---- When the MT acquires validity area information and timer information from the RRCRelease message, the MT may consider the information included in the system information during cell reselection after the timer expires. However, the disclosure is not limited to the example above.
- Opt. 3. Method through OAM
   --- When an MT establishes an initial connection with a gNB, the corresponding NCR MT may be connected through an OAM server to receive a validity area, or may receive configuration of the validity area information in advance before network connection.
   --- In this case, the MT may ignore all the validity area or allowed list/excluded list information given through the dedicated message or system information, and may perform cell reselection by considering, as candidates for cell reselection, only cells corresponding to the validity area received from the OAM server or configured in advance, or when the cell determined during the existing reselection corresponds to the validity area, the FWD ON state may be maintained and the network may control the FWD through the corresponding cell.
- Operation 2: Methods for associating FWD state with allowed cell area
   -- The above-described Operation 1 describes methods for transmitting cells which should be considered as candidates during cell reselection by the MT, and independently from the methods, when reselected cells belong to the validity area, the FWD may maintain the ON state and maintain the cell of the amplified/forwarded signal without change. In addition, when the reselected cell is not a cell in the validity area as a result of cell reselection, the MT may transmit an indicator to the FWD and turn off the FWD. When a cell not belonging to the validity area is reselected, the MT may additionally perform resumption requesting or setup requesting for the corresponding cell (i.e., may transmit an RRCResumeRequest message or an RRCSetupRequest message). In this case, the resume request or setup request message may include, as a cause value, an indicator corresponding to a request for NCR access.
      --- In this case, a method for transmitting the validity area may be identical to the method for making configuration using dedicated signaling among the solutions of Operation 1.

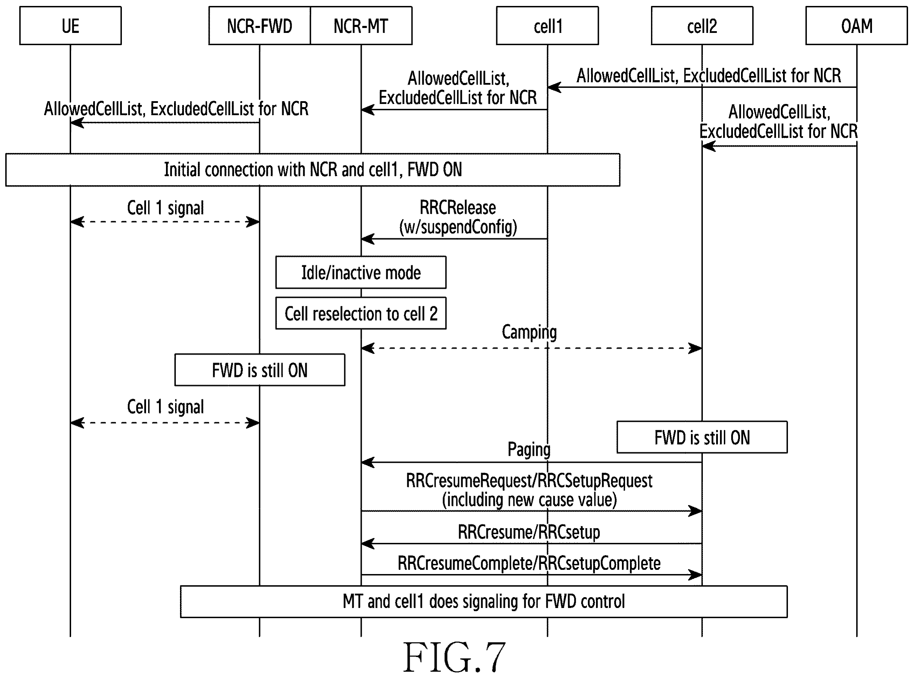

FIG. 7 illustrates a case of controlling cell reselection of an MT through system information of a serving cell through system information according to an embodiment of the disclosure.

According to an embodiment of the disclosure, an OAM server may transmit information of cells corresponding to a validity area associated with a cell to each of the cells. Each of the cells (base stations corresponding to the cells, respectively) broadcasts validity area information for cell reselection through system information by using the information corresponding to the validity area (e.g., the above-described list of cells allowed for cell reselection and the list of cells excluded from cell reselection), acquired from the OAM server.

For example, the cell (the base station) may transmit intraFreqAllowedCellList_NCR through SIB3 and transmit interFreqAllowedCellList_NCR through SIB4. Additionally, the cell (the base station) may broadcast intraFreqExcludedCellList_NCR through SIB3 and broadcast interFreqExcludedCellList_NCR information through SIB 4.

While being connected to the MT, the FWD may amplify a signal of cell 1 and forward the same to UEs (initial connection with NCR and cell 1, FWD on). In addition, system information may be received from cell 1 and stored.

Thereafter, the NCR MT may receive an RRCRelease (with suspendConfig) message through cell 1 and transition to an idle/inactive mode. Simultaneously, cell reselection (cell reselection to cell 2) may be performed by considering, as cell reselection candidates, only the cells in the allowed cell list received through SIB3 and 4.

When cell 2 exists in the allowed cell list, the MT may camp on cell 2. In addition, while maintaining the ON state, the FWD may continue to amplify/forward the signal of the existing cell (cell 1) without change.

Thereafter, when determining to control the NCR (or the FWD of the NCR), cell 2 may page the NCR MT through a paging message or a short message. In this case, an indicator corresponding to paging for NCR control may be included in a paging record field of the paging message or the short message.

The MT may receive the paging message or the short message, and transmit UL RRC message such as RRCresume or RRCsetup. In this case, the UL RRC message may include an indicator indicating NCR access as a cause value (RRCresumeRequest/RRCSetupRequest (including a new case value)).

When cell 2 instructs resumption or setup (RRCresume/RRCsetup) and the MT transmits a complete message corresponding to the resumption or setup ((RRCresumeComplete/RRCsetupComplete), the MT may enter a mode of being connected to cell 2. Thereafter, cell 2 may control the FWD through a DL RRC message/DL MAC CE/DCI. In this process, cell 2 may request NCR context retrieving from the gNB of cell 1 and receive the corresponding information.

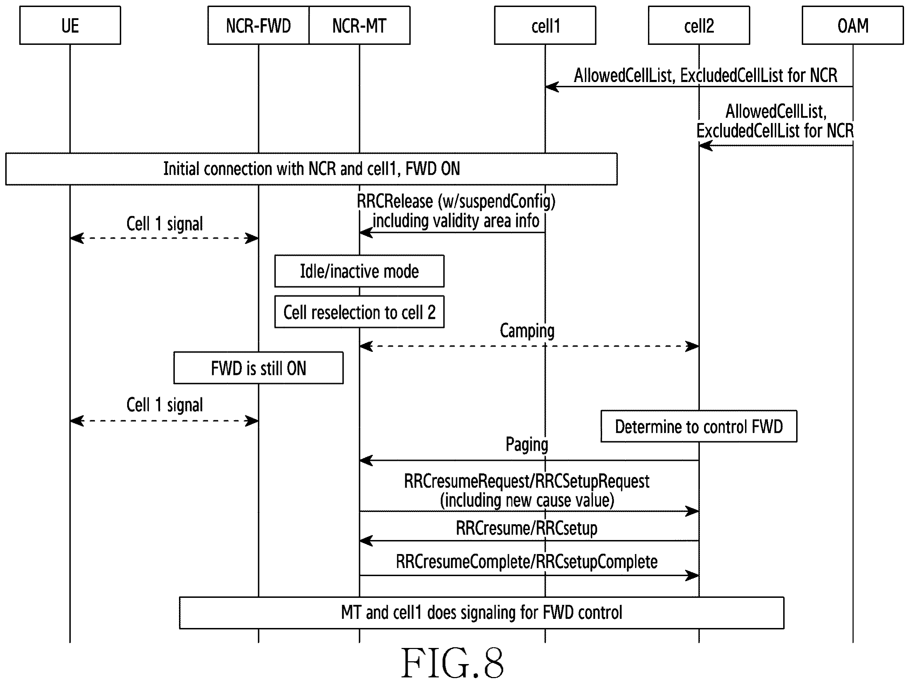

FIG. 8 illustrates a case in which validity area information is forwarded to an MT through a dedicated signal and the MT performs cell reselection based on the information according to an embodiment of the disclosure.

According to an embodiment of the disclosure, an OAM server may transmit information of cells corresponding to a validity area associated with a cell to each of the cells. Each of the cells (base stations corresponding to the cells, respectively) broadcasts validity area information for cell reselection to the MT through a dedicated signal by using the information corresponding to the validity area (e.g., the above-described list of cells allowed for cell reselection and the list of cells excluded from cell reselection), acquired from the OAM server.

While being connected to the NCR MT, the FWD may amplify a signal of cell 1 and forward the same to UEs (initial connection with NCR and cell 1, FWD on).

Thereafter, the NCR MT may receive an RRCRelease (with suspendConfig) message through cell 1 and transition to an idle/inactive mode. In this case, the RRCRelease message may include validity area information (validity area info) (RRCRelease (w/ suspendConfig) including validity area info). It is assumed that the validity area information includes cell 2. The MT may perform cell reselection by considering, as cell reselection candidates, only cells included in the validity area information.

When cell 2 exists in the validity area information and cell 2 is selected as a result of the cell reselection, the MT may camp on cell 2. In addition, while maintaining the ON state, the FWD may continue to amplify/forward the signal of the existing cell (cell 1) without change.

Thereafter, when determining to control the NCR (determining to control FWD), cell 2 may page the NCR MT through a paging message or a short message. In this case, an indicator corresponding to paging for NCR control may be included in a paging record field of the paging message or the short message.

The MT may receive the paging message or the short message, and transmit UL RRC message such as RRCresume or RRCsetup. In this case, the UL RRC message may include an indicator indicating NCR access as a cause value (RRCresumeRequest/RRCSetupRequest (including a new case value)).

When cell 2 instructs resumption or setup (RRCresume/RRCsetup) and the MT transmits a complete message corresponding to the resumption or setup ((RRCresumeComplete/RRCsetupComplete), the MT may enter a mode of being connected to cell 2. Thereafter, cell 2 may control the FWD through a DL RRC message/DL MAC CE/DCI (MT and cell 1 do signaling for FWD control). In this process, cell 2 may request NCR context retrieving from the gNB of cell 1 and receive the corresponding information.

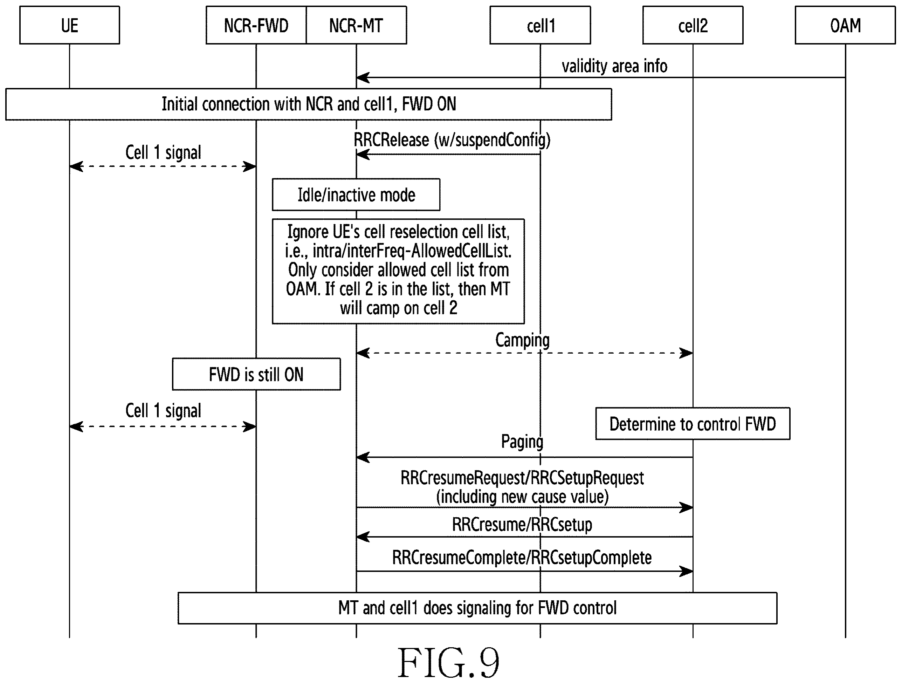

FIG. 9 illustrates a case in which an allowed cell for cell reselection is configured in advance for an MT through OAM according to an embodiment of the disclosure.

According to an embodiment of the disclosure, an OAM server may forward validity area information to an NCR MT by using a separate method (user plane traffic) after the NCR MT is connected to a serving base station.

A validity area may refer to information on a cell allowed as a candidate for cell reselection, or a cell in which a network can control an FWD while maintaining an FWD ON state regardless of cell reselection. The embodiment of FIG. 7 is an example in which the validity area refers to the information on a cell allowed as a candidate for cell reselection.

While being connected to the NCR MT, the FWD may amplify a signal of cell 1 and forward the same to UEs (initial connection with NCR and cell 1, FWD on). Thereafter, the NCR MT may receive an RRCRelease (with suspendConfig) message through cell 1 and transition to an idle/inactive mode. The MT may perform cell reselection simultaneously with the mode transition. In this case, the MT may perform cell reselection in consideration of the validity area configured by the OAM. In this case, intraFreq/interFreq-AllowedCellList and intraFreq/interFreq_excludedCellList which are currently transmitted in cell 1, that is, all cell reselection factors for general UEs, can be ignored (ignore UE's cell reselection list (intraFreq/interFreq-AllowedCellList and intraFreq/interFreq_excludedCellList), only consider allowed cell list from OAM).

When a cell finally determined as a result of the cell reselection is included in the validity area pre-configured by the OAM, the MT may camp on the corresponding cell (if cell 2 is in the list from OAM, then MT will camp), and simultaneously, the FWD may amplify/forward the originally amplified/forwarded signal of the cell while maintaining the ON state.

Thereafter, when determining to controls the NCR (determining to control FWD), cell 2 may page the NCR MT through a paging message or a short message. In this case, an indicator corresponding to paging for NCR control may be included in a paging record field of the paging message or the short message.

The MT may receive the paging message or the short message, and transmit UL RRC message such as RRCresume or RRCsetup. In this case, the UL RRC message may include an indicator indicating NCR access as a cause value (RRCresumeRequest/RRCSetupRequest (including a new case value)).

When cell 2 instructs resumption or setup (RRCresume/RRCsetup) and the MT transmits a complete message corresponding to the resumption or setup ((RRCresumeComplete/RRCsetupComplete), the MT may enter a mode of being connected to cell 2. Thereafter, cell 2 may control the FWD through a DL RRC message/DL MAC CE/DCI (MT and cell 2 do signaling for FWD control). In this process, cell 2 may request NCR context retrieving from the gNB of cell 1 and receive the corresponding information.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a network controller repeater (NCR), the method comprising:
acquiring validity area information from an operations, administration, and maintenance (OAM) server;
amplifying and forwarding a signal of a first cell by a forward (FWD) of the NCR;
receiving an RRCRelease message from the first cell by a mobile termination (MT) of the NCR; and
performing a cell reselection procedure by the MT of the NCR, based on the validity area information,
wherein the validity area information comprises a list of cells to which the MT of the NCR is allowed to be connected or a list of cells to which the MT of the NCR cannot be connected.

2. The method of claim 1, wherein the performing of the cell reselection procedure, based on the validity area information, comprises ignoring a cell reselection parameter included in system information of the first cell by the MT of the NCR.

3. The method of claim 2, wherein the validity area information comprises timer information, and
wherein the performing of the cell reselection procedure comprises, in case that a timer according to the timer information expires, considering the cell reselection parameter included in the system information of the first cell.

4. The method of claim 1, wherein the performing of the cell reselection procedure, based on the validity area information, comprises camping on a second cell, based on the validity area information, and
wherein the FWD of the NCR continues to amplify and forward the signal of the first cell in the second cell.

5. The method of claim 4, further comprising:
receiving a paging message or a short message from the second cell by the MT of the NCR;
performing a connection procedure with the second cell by the MT of the NCR; and
controlling the FWD of the NCR by the second cell.

6. The method of claim 5, wherein the performing of the connection procedure comprises:
transmitting an RRCresumeRequest message or an RRCSetupRequest message to the second cell by the MT of the NCR;
receiving an RRCresume message and an RRCsetup message from the second cell by the MT of the NCR;
receiving the RRCresume message and the RRCsetup message by the MT of the NCR; and
receiving an RRCresumecomplete message and an RRCsetupcomplete message by the MT of the NCR.

7. The method of claim 6, wherein the paging message or the short message comprises an indicator indicating paging for NCR control, and
wherein the RRCresume message and the RRCsetup message comprise an indicator indicating access to the NCR.

8. The method of claim 1, wherein the performing of the cell reselection procedure comprises, in case that an element is not included or a no-cellReselection indicator is included in the validity area information, identifying only the first cell as a cell for cell reselection.

9. A network controller repeater (NCR) device comprising a forward (FWD) of the NCR and a mobile termination (MT) of the NCR in a wireless communication system, the device comprising:
a transceiver; and
at least one processor coupled to the transceiver,
wherein the at least one processor is configured to:
acquire validity area information from an operations, administration, and maintenance (OAM) server;
amplify and forward a signal of a first cell by the FWD of the NCR;
receive an RRCRelease message from the first cell by the MT of the NCR; and
perform a cell reselection procedure by the MT of the NCR, based on the validity area information, and
wherein the validity area information comprises a list of cells to which the MT of the NCR is allowed to be connected or a list of cells to which the MT of the NCR cannot be connected.

10. The device of claim 9, wherein the at least one processor is configured to ignore a cell reselection parameter included in system information of the first cell.

11. The device of claim 10, wherein the validity area information comprises timer information, and
wherein the at least one processor is configured to, in case that a timer according to the timer information expires, consider the cell reselection parameter included in the system information of the first cell.

12. The device of claim 9, wherein the at least one processor is configured to camp on a second cell, , based on the validity area information, and
wherein the FWD of the NCR continues to amplify and forward the signal of the first cell in the second cell.

13. The device of claim 12, wherein the at least one processor is configured to:
receive a paging message or a short message from the second cell;
perform a connection procedure with the second cell; and
cause the second cell to control the FWD of the NCR.

14. The device of claim 13, wherein the at least one processor is configured to:
transmit an RRCresumeRequest message or an RRCSetupRequest message to the second cell;
receive an RRCresume message and an RRCsetup message from the second cell;
receive the RRCresume message and the RRCsetup message; and
receive an RRCresumecomplete message and an RRCsetupcomplete message.

15. The device of claim 14, wherein the paging message or the short message comprises an indicator indicating paging for NCR control, and
wherein the RRCresume message and the RRCsetup message comprise an indicator indicating access to the NCR.
